# EUROPÄISCHE PATENTSCHRIFT

(11) **EP 4 349 183 B1**
(45) Veröffentlichungstag und Bekanntmachung des Hinweises auf die Patenterteilung: **07.05.2025**
(21) Anmeldenummer: 23201159.3
(22) Anmeldetag: 02.10.2023
(51) Int. Cl.: A23N 4/12, A01D 45/00

(54) **KÜRBISERNTEMASCHINE**
PUMPKIN HARVESTING MACHINE
MACHINE DE RÉCOLTE DE CUCURBITACÉES

(30) Priorität: 04.10.2022 AT 1912022
(43) Veröffentlichungstag der Anmeldung: 10.04.2024
(73) Patentinhaber: Bangerl, Mathias, 4760 Raab (AT)
(72) Erfinder: Bangerl, Mathias, 4760 Raab (AT)
(74) Vertreter: Hübscher & Partner Patentanwälte GmbH

(56) Entgegenhaltungen:
- AT-U1- 15 522
- CN-A- 107 409 644
- CN-U- 205 491 781
- CN-U- 207 340 553

## Beschreibung

Die Erfindung betrifft eine Kürbiserntemaschine, die das Erntegut mittels einer Stachelwalze aufnimmt, es weiter in einem Brecher zerkleinert und in der Folge in einem Drescher in Fruchtteile und Samenkörner trennt, die Fruchtteile auswirft und die Samenkörner fallweise reinigt und schließlich einem Korntank zuführt, wobei der Brecher eine von einem Gehäuse umgebene Messerwalze mit zur Achse der Stachelwalze paralleler Achse enthält, von welchem Gehäuse ein Abstreifblech direkt zwischen die Stacheln der Stachelwalze reicht und wobei ein erster Drescher, der unmittelbar unter dem Brecher und achsparallel zu diesem angeordnet ist, zum Fördern des Ernteguts von der Mitte aus in beide entgegengesetzten Richtungen vorgesehen ist. Der großflächige Anbau von Kürbissen dient der Gewinnung eines Öles aus deren Kernen.

Eine derartige Kürbiserntemaschine offenbart beispielsweise die CN 205491781 A. Aus der AT 403 754 B ist eine Kürbiserntemaschine bekannt, die in der Art eines selbstfahrenden Mähdreschers aufgebaut ist. Ein Ausleger mit Einzugsrotoren nimmt die Kürbisse auf. Die weitere Zerkleinerung und Trennung erfolgt durchwegs in Längsrichtung. Es handelt sich um eine große und sperrige selbstfahrende Spezialmaschine, was alleine deshalb bereits unwirtschaftlich ist.

In der AT 15 522 U1 ist eine Kürbiserntemaschine beschrieben, die die Kürbisse mittels einer die Arbeitsbreite bestimmenden Stachelwalze aufnimmt. Von dieser werden die Kürbisse über ein Förderband einem Brecher und dann von mehreren Förderschnecken einer Druschtrommel und über weitere Fördermittel einer Putztrommel zugeführt. Die vielen Fördermittel begrenzen die Durchlaufkapazität und machen die Maschine sperrig. Außerdem behindern die harten Teile der Schalen der Kürbisse die Trennung des Fruchtfleisches empfindlich.

Der Erfindung liegt daher die Aufgabe zugrunde, die einzelnen Bearbeitungsstellen so anzuordnen, dass bei hoher Durchlaufmenge mit einem Minimum an Fördervorrichtungen und Bauraum sowie Antriebsleistungsbedarf eine einwandfreie Trennung der Kerne gelingt. Die ganze Maschine soll als Anbaugerät am Hubwerk eines Traktors anbringbar sein. Erfindungsgemäß wird das mit einer Anordnung gemäß Merkmalen des Anspruchs 1 erreicht.

Der Übergang von der Stachelwalze zum Brecher und von diesem zum ersten Drescher und weiter zu den zweiten Dreschern erfolgt direkt durch die Schwerkraft, ohne eigene Fördermittel. Der symmetrisch in beide Richtungen fördernde erste Drescher und die parallele Verdoppelung der zweiten Drescher erhöht die Durchlaufkapazität und damit die mögliche Fahrgeschwindigkeit. Die Anordnung der zweiten Drescher in Längsrichtung erlaubt bei maximaler Arbeitsbreite die Einhaltung der für Straßenfahrzeuge erlaubten Breite. Weiters erleichtert diese Anordnung den rein mechanischen Antrieb der Rotoren und der wenigen Fördervorrichtungen von der Zapfwelle des Traktors. Insgesamt wird so ein geringes Bauvolumen und Gewicht der ganzen Maschine erreicht, sodass sie für den Anbau an einen Traktor geeignet ist.

Die Nachdrescher besorgen den restlosen Auswurf des Fruchtfleisches bis zur Reinigung der Kerne, wobei der Auswurf dank der Verkleidung über die ganze Länge des Nachdreschers nach außen erfolgt.

Die folgenden Weiterbildungen tragen zusätzlich zur Lösung der gestellten Aufgabe bei:
Über das zum Brecher hin geneigte Abstreifblech rollen die Kürbisse durch Schwerkraft auf kürzestem Weg zum Brecher, in dem sie zerkleinert werden.

Im ersten Drescher wird der Kürbis weiter zerkleinert. Der Gutstrom wird geteilt, zerkleinert und zu den beidseitigen Enden geführt. Dabei werden an den Siebstäben Kerne abgeschieden. Die Siebstäbe bilden als Teil der ersten Trommel einen Dreschkorb. Ihr Abstand ist so groß, dass sie nicht von Teilen der Schalen der Kürbisse verstopft werden. Dank der quer längs gerichteten Stäbe fällt das Erntegut (Fruchtfleisch, Schalenteile und Kerne) auch auf die darunter angeordnete ebenfalls in beide Richtungen wirkende Förderschnecke. Die Siebstäbe ersetzen die üblichen Löcher, die leicht verstopfen.

Durch die Verdoppelung der zweiten Drescher wird die Durchlaufkapazität gesteigert und durch deren offene Enden treten die Schalenteile aus beiden aus, sodass sie die weitere Trennung nicht mehr behindern können.

Die das Innere der Dreschtrommeln nicht berührenden Schaufelblätter der ersten und zweiten Rotoren schleudern das von den Schalen befreite Gut durch die längs gerichteten Stäbe. Sie könnten auch quer gerichtet sein. Die archimedisch wirkenden Spiralen am Ende der zweiten Rotoren fördern die Schalenteile zum Auswurf.

Die radial ausgerichteten Stäbe zwischen den Schaufelblättern sind an die Rotorhen angeschweißt. Sie verzögern den Durchlauf des Gutes durch die Dreschtrommeln, sodass das Gut intensiver bearbeitet wird.

Die Anordnung der Nachdrescher über den zweiten Dreschern spart Bauraum und reduziert die Breite der ganzen Maschine. Die Förderschnecken liegen so, dass sie einfach vom Eingang der Zapfwelle aus antreibbar sind.

Das die Nachdrescher umgebende Lochblech bildet die dritte Trommel und hält die Kerne zurück. Die hier am Lochblech anliegenden Schaufelblätter drücken das Fruchtfleisch restlos durch das Lochblech, sodass nur mehr die reinen Kerne innerhalb des Lochblechs verbleiben. Die Verkleidung nur an der Innenseite und der Unterseite der Rotoren erlaubt den Auswurf des Fruchtfleisches nach außen und so dessen gleichmäßige Verteilung über die Ackerfläche.

Im Folgenden wird die Erfindung anhand einer bevorzugten Ausführungsform beschrieben und erläutert. Es stellen dar:
Fig. 1 Die ganze Kürbiserntemaschine, axonometrisch
Fig. 2 Deren Vorderansicht,
Fig. 3 Deren Seitenansicht,
Fig. 4 Deren Draufsicht,
Fig. 5: Einen Querschnitt nach BB in Fig. 3,
Fig. 6: Einen Längsschnitt nach AA in Fig.2,
Fig. 7: Schnitt nach CC in Fig. 5,
Fig. 8: Die Rotoren der Drescher.

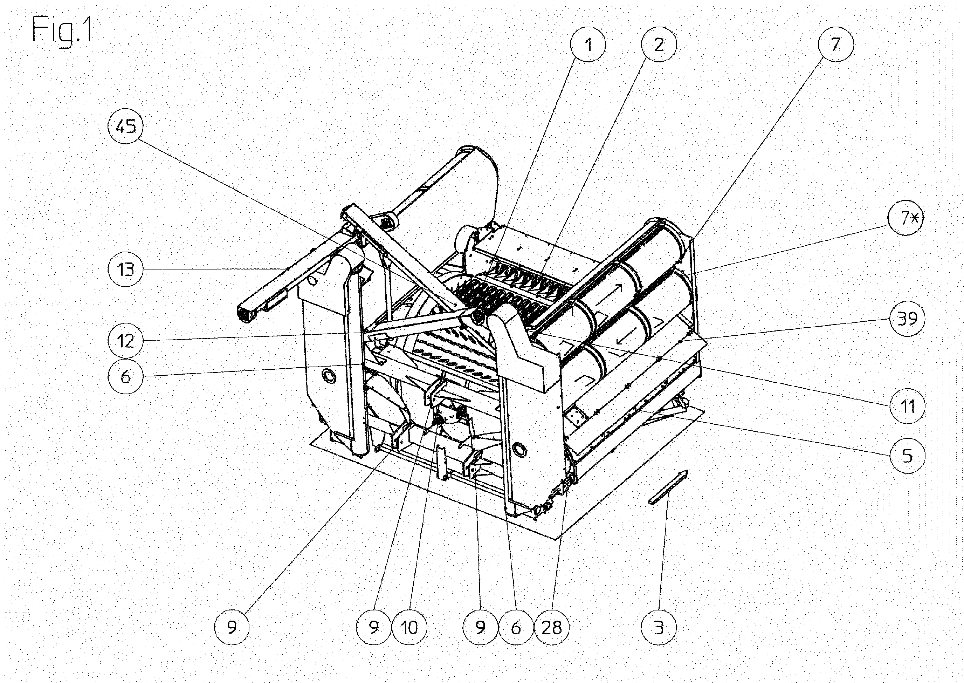

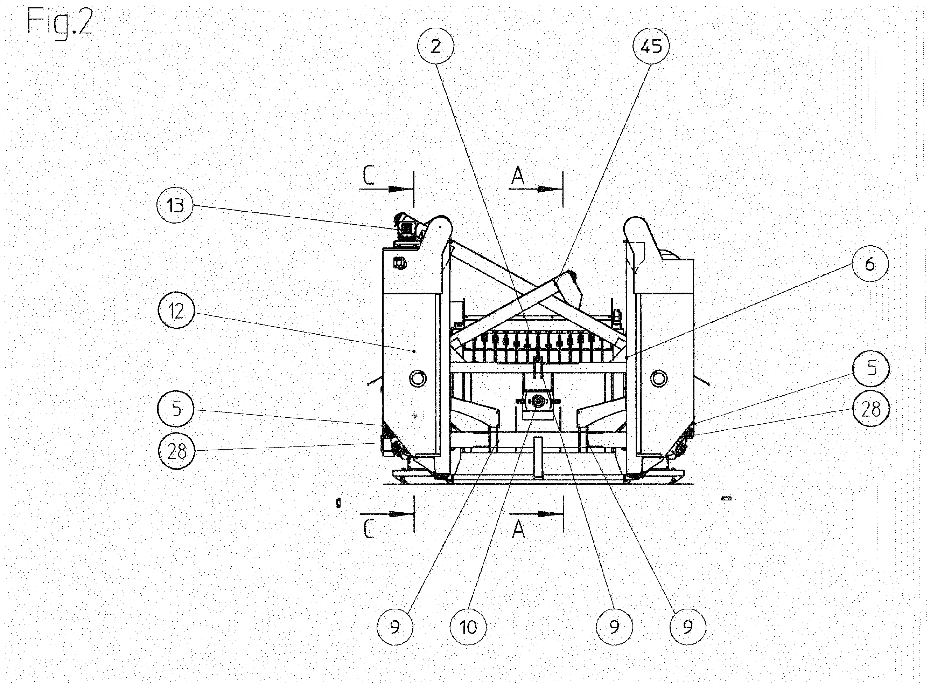

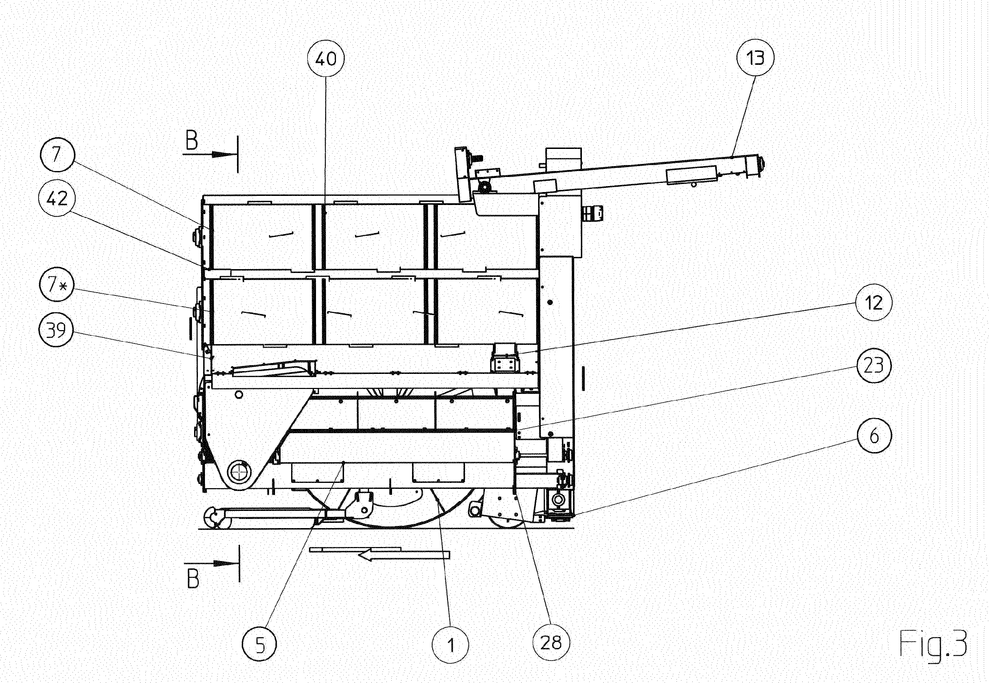

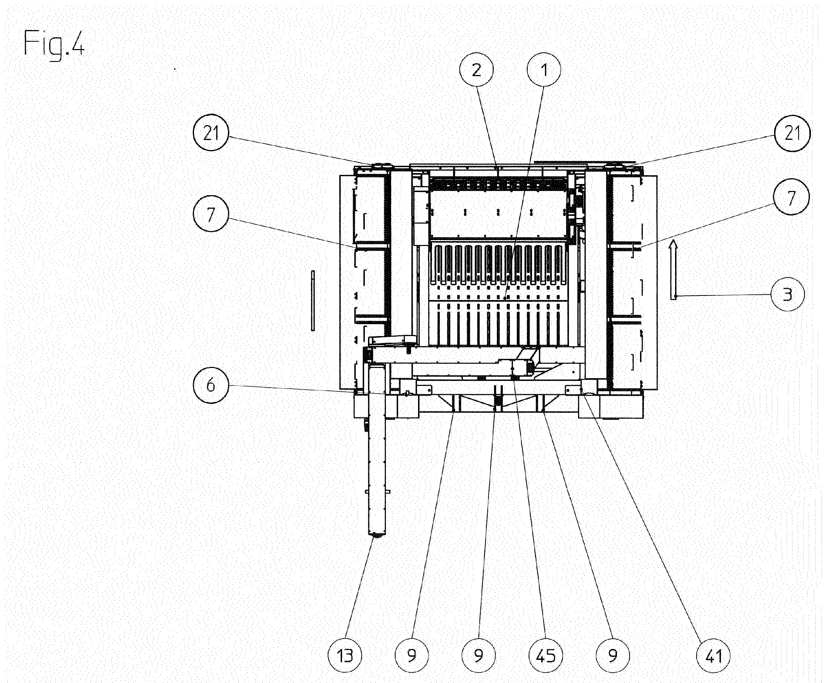

Die Fig. 1 - 4 sind Ansichten von außen, anhand derer der Fluss des Erntegutes (Kürbisse) zunächst in groben Zügen beschrieben ist. An der Rückseite der Maschine sind die Anlenkpunkte 9 des Hubwerkes eines Traktors und ist ein Zapfwellenstummel 10 der Maschine angedeutet. Im Erntebetrieb, bei Fahrtrichtung 3, ist vorne eine Stachelwalze 1 drehbar gelagert, die die Kürbisse aufspießt und aufwärts bis zu einem Brecher 2 mitnimmt, wozu sie keinen eigenen Antrieb benötigt. Die Stachelwalze ist quer und mittig angeordnet und nimmt einen Großteil der Breite der ganzen Maschine ein.

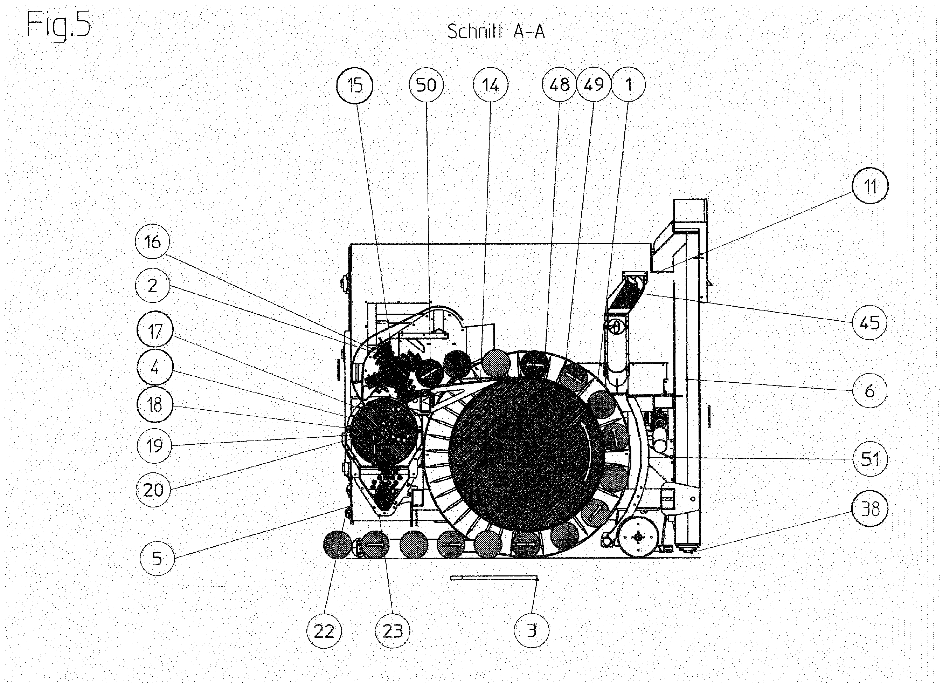

An die Stachelwalze 1 schließt direkt und etwas tiefer ein Brecher 2 an, in dem die Kürbisse zwischen spiralförmig angestellten Messern zerhackt werden. Unter dem Brecher 2, ist (siehe auch Fig. 5) ein erster Drescher 4, der das zerhackte Erntegut weiter zerkleinert und von seiner Längsmitte aus in beide Richtungen nach außen fördert. Dort gelangt es in die beidseitigen längs gerichteten zweiten Drescher 5, in denen es weiter zerkleinert wird und die Schalen der Kürbisse an den Enden ausgeworfen werden. Das zerkleinerte Gut wird auch von darunter angeordneten ersten Förderschnecken 22 ersten Fördervorrichtungen 6 zugeführt.

Die beidseitigen ersten Fördervorrichtungen 6 heben das Erntegut zu über den zweiten Dreschern 5 angeordneten beidseitigen Nachdreschern 7. In diesen wird das Fruchtfleisch nach der Seite ausgeworfen und die Kerne an einem Ende gesammelt. In der abgebildeten Ausführungsform sind jeweils zwei Nachdrescher 7, 7* übereinander angeordnet, wobei der Übergang vom ersten zum zweiten Nachdrescher auch nur durch die Schwerkraft bewirkt wird. So sind im unteren Nachdrescher 7 auch die letzten Reste des Fruchtfleisches von den Kernen getrennt. Die Kerne treten am anderen Ende 12, 42 des unteren der beiden Nachdrescher 7 aus. Wenn beiderseits nur ein einziger Nachdrescher 7 ist, befindet sich das andere Ende 12, 42 auf der der zweiten Fördervorrichtung 6 entgegengesetzten Seite. Die am Ende 12, 42 des Nachdreschers 7 austretenden Kerne werden von dritten Fördervorrichtungen 45 aufgenommen und zu einem nicht dargestellten Kerntank gefördert. Dieser kann an beliebiger Stelle angebracht sein; so auch am anderen Ende des Traktors.

In Fig. 5 ist der Brecher 2 und der unmittelbar darunter angeordnete erste Drescher 4 zu sehen. Der Brecher 2 besteht aus einer Messerwalze 15 und einem Gehäuse 16, das Gegenmesser 50 trägt und in ein Abstreifblech 14 übergeht. Dieses ragt zwischen die Stacheln 49 der Stachelwalze 1, welche in Fig. 5 gegen den Uhrzeigersinn rotiert. Kürbisse sind 48 ist angedeutet. Eine Rückwand 51 verhindert deren vorzeitigen Absturz und stellt die Aufnahme aller Kürbisse sicher.

Der erste Drescher 4 besteht aus einer quer zur Fahrtrichtung 3 angeordneten stationären ersten Trommel 17 und darin einem ersten Rotor 18. Zumindest der untere Teil der Trommel 17 ist aus längs gerichteten Stäben 19 gebildet, unter denen eine ebenfalls in entgegengesetzte Richtungen wirkende erste Förderschnecke 22 ist. Der erste Rotor 18 hat beiderseits entgegengesetzt gerichtet schräg angestellte Schaufelblätter 20, die das Erntegut von der Mitte zu den äußeren Enden 21 fördern und die das Innere der ersten Trommel 17 nicht berühren.

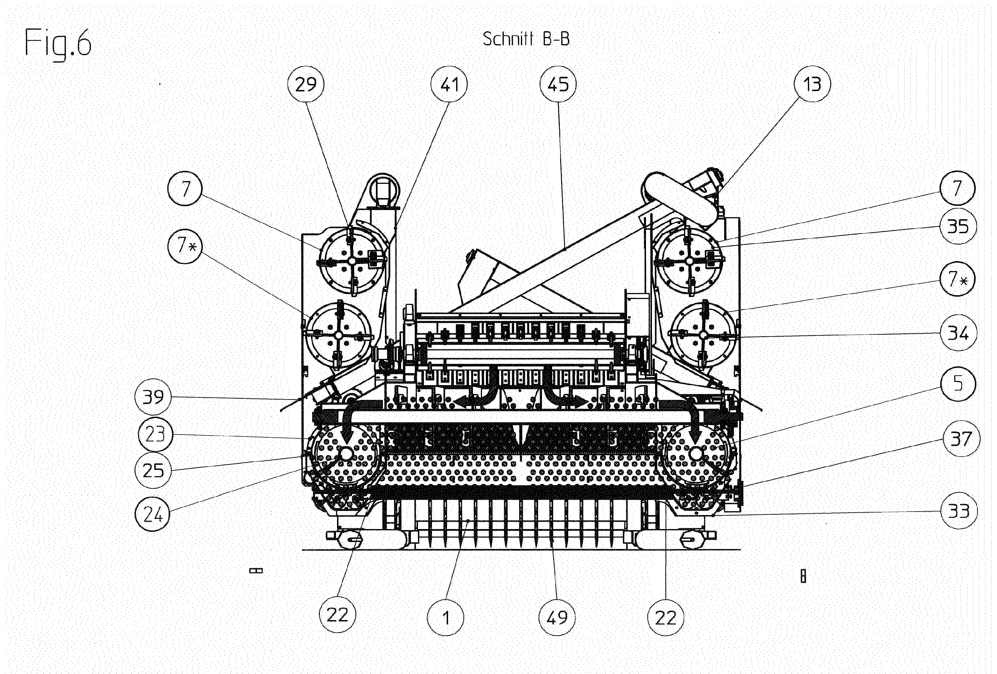

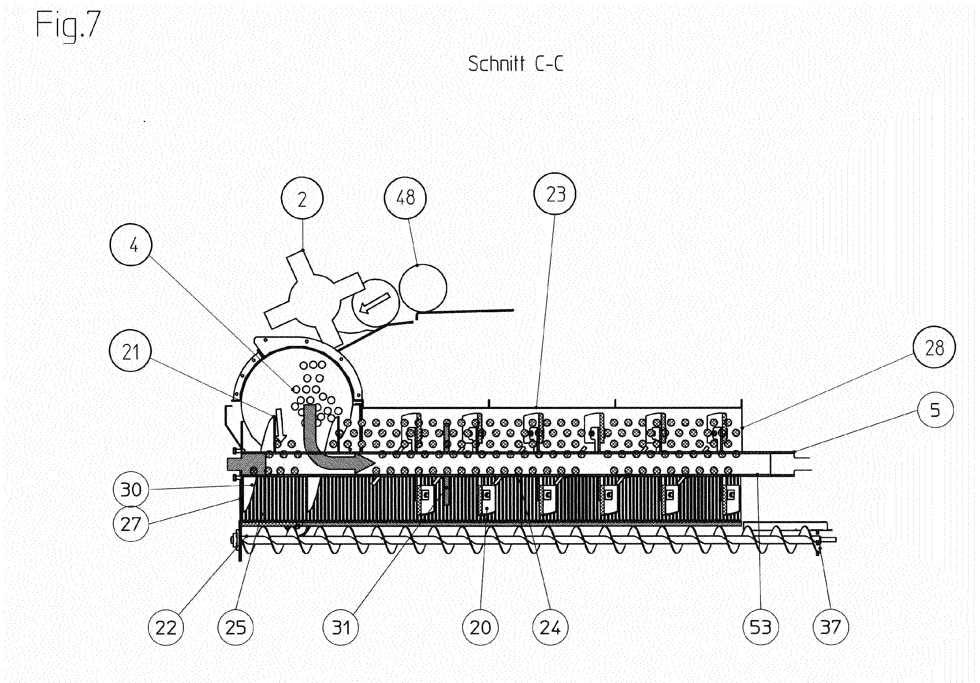

Unter den beiden äußeren Enden 21 (siehe Fig. 6 und 7) der ersten Drescher 4 ist der Eingang 27 in zweite Drescher 5, welche beiderseits in Längsrichtung angeordnet sind. Die zweiten Drescher 5 bestehen jeweils aus einer stationären zweiten Trommel 23 und einem zweiten Rotor 24. Die Trommeln 23 haben zumindest an ihrem unteren Teil längs gerichtete Stäbe 25. Sie könnten auch gebogen und quer angeordnet sein. Darunter befindet sich eine erste Förderschnecke. Am dem Eingang 22 abgelegenen Ende sind die Trommeln 23 offen.

Die zweiten Rotoren 24 der zweiten Drescher 5 tragen schräg angestellte Schaufelblätter 20, die das Innere der Dreschtrommel 17 nicht berühren und an der Seite der Ausgangsöffnungen 28 eine Spirale 30 tragen, die die Schalen der Kürbisse zu diesen Ausgangsöffnungen 28 bewegen und sie auswerfen. Die zweiten Rotoren 24 der zweiten Drescher 5 haben zwischen den schräg gestellten Schaufelblättern 20 radial gerichtete Stäbe 31. Diese haben den Zweck, die Verweilzeit des Erntegutes in den Trommeln 23 (und auch 17) zu verlängern und so die Trennung des Erntegutes zu verbessern. Ebenso die ersten Rotoren 18 und die zweiten Rotoren 24.

Unter den zweiten Dreschern 5 ist jeweils auch eine Rinne 33, in die das Erntegut (Fruchtfleisch und Kerne) geschleudert wird. Die Rinnen 33 enthalten jeweils eine zweite Förderschnecke 37, beziehungsweise ein Paar von Förderschnecken 37, die das Erntegut weiter ersten Fördervorrichtungen 6 zuführen. Die Fördervorrichtungen 6 auf beiden Seiten enthalten eine im Wesentlichen vertikale dritte Förderschnecke 38, die das Gut den Nachdreschern 7 zuführt.

Die beiderseitigen Nachdrescher 7 bestehen jeweils aus einer stationären Dreschtrommel 35 und einem dritten Rotor 34, wobei die Dreschtrommeln 35 als die Rotoren 34 umschließende Lochbleche 40 ausgebildet sind. Die Rotoren 34 tragen angestellte Schaufelblätter 20, die das Lochblech 40 berühren, wobei das Erntegut an einer Seite 41 eintritt und am anderen Ende 12, 42 die Kerne austreten. Das Fruchtfleisch wird von den das Lochblech berührenden Schaufelblättern 29 durch die Lochbleche 19 gedrückt und ausgeworfen. Um das Fruchtfleisch nach außen zu schleudern ist eine Verkleidung 39 angebracht.

In der vorliegenden Ausführungsform ist über den Nachdreschern 7 jeweils ein weiterer Nachdrescher 7* in Serie angeordnet. Die Kerne treten aus dem Nachdrescher 7 auf der Seite des Eintrittes des Erntegutes in den weiteren Nachdrescher 7* aus. Die am anderen Ende 12, 42 des Nachdreschers 7 austretenden Kerne werden von dritten Fördervorrichtungen 45 aufgenommen und zu einem nicht gezeigten Korntank gefördert.

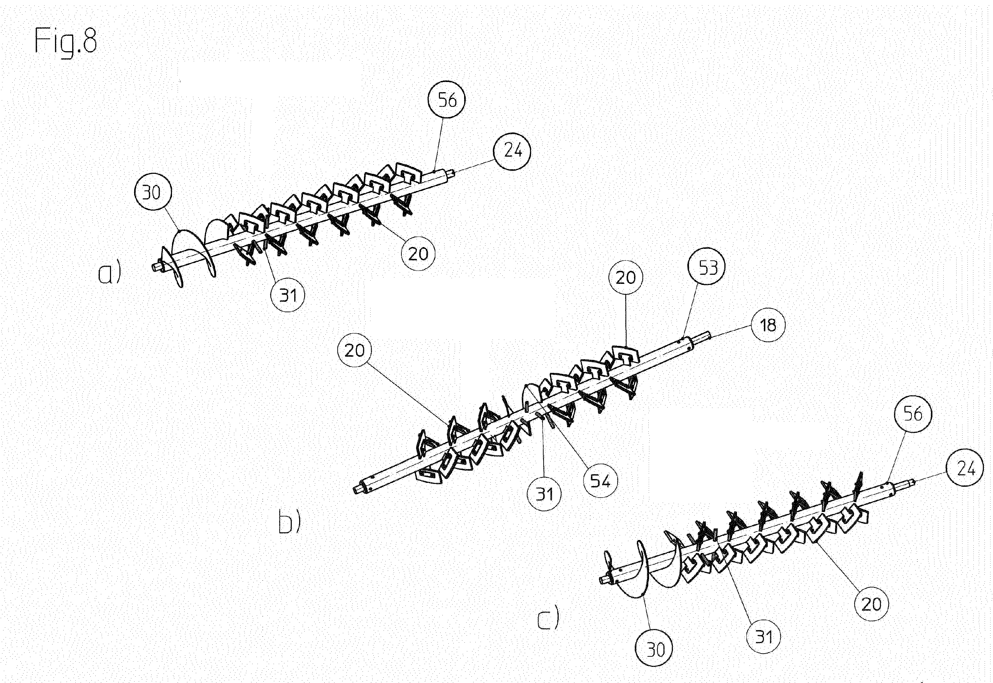

In Fig. 8 ist unter b) der erste Rotor 18 des ersten Dreschers 4 und sind unter a) und c) die zweiten Rotoren 24 der beidseitigen zweiten Drescher 5 zu sehen. Der erste Rotor 18 ist eine 1. Welle 53 mit einer mittigen radialen Trennscheibe oder Trennspirale 54 und beiderseits Schaufelblättern 20, vorzugsweise aus einem geeigneten nachgiebigen Kunststoff, welche jeweils nach außen fördern, die im Bild rechten Schaufelblätter 20 nach rechts und die linken 20 nach links. Zwischen den Schaufelblättern 20 sind radiale Stäbe 31 angebracht, wobei einer gegen den Folgenden um einen rechten Winkel versetzt ist.

Die zweiten Rotoren 24 haben auf einer zweiten Welle 56 den Schaufelblättern 20 gleichende Schaufelblätter 26 und in Förderrichtung daran anschließend je eine Spirale 30, die die Schalenteile der Kürbisse auswerfen.

Insgesamt wird so eine Kürbiserntemaschine zur Verfügung gestellt, die bei geringen Ausmaßen, relativ geringem Gewicht und relativ geringem Leistungsbedarf eine hohe Erntegeschwindigkeit erreicht.

## Patentansprüche

1. Kürbiserntemaschine, mit einer Stachelwalze (1) zum Aufnehmen von Erntegut, einem Brecher (2) zum Zerkleinern des Ernteguts, Dreschern zum anschließenden Trennen des Ernteguts in Fruchtteile und Samenkörner und zum Zuführen der Samenkörner zu einem Korntank, wobei
a) der Brecher (2) eine von einem Gehäuse (16) umgebene Messerwalze (15) mit zur Achse der Stachelwalze (1) paralleler Achse enthält, von welchem Gehäuse (16) ein Abstreifblech (14) direkt zwischen die Stacheln der Stachelwalze (1) reicht,
b) ein erster Drescher (4), der unmittelbar unter dem Brecher (2) und achsparallel zu diesem angeordnet ist, zum Fördern des Ernteguts von der Mitte aus in beide entgegengesetzten Richtungen, **dadurch gekennzeichnet, dass**
c) zweite Drescher (5) beiderseits in Längsrichtung angeordnet sind, deren Eingang (22) jeweils unter den beidseitigen Ausgängen des ersten Dreschers (4) und an deren anderen Enden Ausgangsöffnungen (28) sind,
d) über den beiden zweiten Dreschern (5) jeweils mindestens ein Nachdrescher (7) angeordnet ist, und unter den beiden zweiten Dreschern (5) eine Rinne (33) zum Sammeln von Erntegut angeordnet ist, sowie eine erste Fördervorrichtung (6) zum Fördern des Ernteguts von der Rinne (33) zum Nachdrescher (7).

2. Kürbiserntemaschine nach Anspruch 1, **dadurch gekennzeichnet, dass** die Nachdrescher (7) an einem Ende eine Gutzufuhr (11) und am anderen Ende eine Kernabfuhr haben, an die eine zu einem Korntank führende zweite Fördervorrichtung (13) anschließt, und dass an der Innenseite eine Verkleidung (39) angebracht ist.

3. Kürbiserntemaschine nach Anspruch 1, **dadurch gekennzeichnet, dass** das Gehäuse (16) des Brechers (2) das Abstreifblech (14) bildet und dieses zum Brecher (2) hin abwärts geneigt ist.

4. Kürbiserntemaschine nach Anspruch 1, **dadurch gekennzeichnet, dass** der erste Drescher (4) aus einer stationären ersten Dreschtrommel (17) und einem ersten Rotor (18) besteht, wobei zumindest der untere Teil der Dreschtrommel (17) aus Stäben (19) gebildet ist, unter denen eine ebenfalls in entgegengesetzte Richtungen wirkende erste Förderschnecke (22) wirkt, und wobei der erste Rotor (18) beiderseits in entgegengesetzter Richtung schräg angestellte Schaufelblätter (20) aufweist, die das Erntegut von der Mitte zu den äußeren Enden (21) fördern und die das Innere der Dreschtrommel (17) nicht berühren.

5. Kürbiserntemaschine nach Anspruch 1, **dadurch gekennzeichnet, dass** die zweiten Drescher (5) jeweils aus einer stationären zweiten Dreschtrommel (23) und einem zweiten Rotor (24) bestehen, wobei die Dreschtrommeln (23) an ihrem unter den äußeren Enden (21) der ersten Drescher (4) gelegenen Enden eine Eintrittsöffnung (27) für das Erntegut haben, und das andere Ende eine Ausgangsöffnung (28) bildet und der untere Teil der Dreschtrommel (23) Stäbe (25) hat und sich darunter eine erste Förderschnecke (22) befindet.

6. Kürbiserntemaschine nach Anspruch 5, **dadurch gekennzeichnet, dass** die zweiten Rotoren (24) der zweiten Drescher (5) schräg angestellte Schaufelblätter (20) tragen, die das Innere der Dreschtrommel (17) nicht berühren und eine Spirale (30) zum Bewegen und Auswerfen der Schalen der Kürbisse zu und durch die Ausgangsöffnungen (28).

7. Kürbiserntemaschine nach Anspruch 6 oder 4, **dadurch gekennzeichnet, dass** zumindest einer der beiden Rotoren (18, 24) der Drescher (4, 5) zwischen den schräg angestellten Schaufelblättern (20, 26) radial gerichtete Stäbe (31) haben.

8. Kürbiserntemaschine nach Anspruch 1, **dadurch gekennzeichnet, dass** die Rinne (33) unter den zweiten Dreschern (5) eine zweite Förderschnecke (37) enthält und die erste Fördervorrichtung (6) eine im Wesentlichen vertikale dritte Förderschnecke (38) ist, durch die das Gut an einem Ende der Nachdrescher (7) einbringbar ist.

9. Kürbiserntemaschine nach Anspruch 1, **dadurch gekennzeichnet, dass** die beiderseitigen Nachdrescher (7) jeweils aus einer stationären Dreschtrommel (35) und einem dritten Rotor (34) bestehen, wobei die Dreschtrommeln als die Rotoren (34) umschließende Lochbleche (40) ausgebildet sind und die Rotoren (34) angestellte Schaufelblätter (36) aufweisen, die das Lochblech (40) berühren, wobei die Nachdrescher (7) eine Seite (41) zum Eintritt des Gutes und ein anderes Ende (42) zum Austritt der Kerne aufweisen.

10. Kürbiserntemaschine nach Anspruch 9, **dadurch gekennzeichnet, dass** über den Nachdreschern (7) jeweils ein weiterer Nachdrescher (7*) in Serie angeordnet ist und dass die Kerne aus dem Nachdrescher (7) auf der Seite des Eintrittes des Erntegutes in den weiteren Nachdrescher (7*) austreten.

11. Kürbiserntemaschine nach Anspruch 9, **dadurch gekennzeichnet, dass** am anderen Ende (42) des Nachdreschers (7) eine dritte Fördervorrichtung (13) zum Aufnehmen der austretenden Kerne und Fördern zum Korntank angeordnet ist.

## Claims

1. Pumpkin harvesting machine, with a spiked roller (1) for picking up harvested material, a crusher (2) for crushing the harvested material, threshers for subsequently separating the harvested material into fruit parts and seeds and for feeding the seeds to a seed tank, wherein
a) the crusher (2) contains a knife roller (15) with an axis parallel to the axis of the spiked roller (1) surrounded by a housing (16), from which housing (16) a scraper plate (14) extends directly between the spikes of the spiked roller (1),
b) a first thresher (4), which is arranged directly below the crusher (2) and axially parallel thereto, for conveying the crop material from the centre in both opposite directions, **characterised in that**
c) second threshers (5) are arranged on both sides in the longitudinal direction, the inlet (22) of which are in each case below the outlets on both sides of the first thresher (4) and at the other ends of which are outlet openings (28),
d) at least one after-thresher (7) is arranged above each of the two second threshers (5), and a chute (33) for collecting crop material is arranged below the two second threshers (5), and a first conveying device (6) for conveying the crop material from the chute (33) to the after-thresher (7).

2. Pumpkin harvester according to claim 1, **characterised in that** the after-thresher (7) has a crop feed (11) at one end and a seed discharge at the other end, to which seed discharge a second conveying device (13) leading to a seed tank is connected, and **in that** a cover (39) is fitted on the inside.

3. Pumpkin harvester according to claim 1, **characterised in that** the housing (16) of the crusher (2) forms the scraper plate (14) and this is inclined downwards towards the crusher (2).

4. Pumpkin harvester according to claim 1, **characterised in that** the first thresher (4) consists of a stationary first threshing drum (17) and a first rotor (18), at least the lower part of the threshing drum (17) being formed from rods (19), under which a first auger conveyor (22) also acting in opposite directions acts, and wherein the first rotor (18) has paddle blades (20) set at an angle in opposite directions on both sides, which convey the crop from the centre to the outer ends (21) and which do not touch the interior of the threshing drum (17).

5. Pumpkin harvester according to claim 1, **characterised in that** the second threshers (5) each consist of a stationary second threshing drum (23) and a second rotor (24), wherein the threshing drums (23) have an inlet opening (27) for the crop material at their ends located below the outer ends (21) of the first threshers (4), and the other end forms an outlet opening (28), and the lower part of the threshing drum (23) has rods (25) and a first auger conveyor (22) is located below it.

6. Pumpkin harvester according to claim 5, **characterised in that** the second rotors (24) of the second threshers (5) carry inclined paddle blades (20) which do not touch the inside of the threshing drum (17) and a spiral (30) for moving and ejecting the shells of the pumpkins to and through the outlet openings (28).

7. Pumpkin harvester according to claim 6 or 4, **characterised in that** at least one of the two rotors (18, 24) of the threshers (4, 5) have radially directed rods (31) between the inclined blades (20, 26).

8. Pumpkin harvester according to claim 1, **characterised in that** the chute (33) below the second threshers (5) contains a second auger conveyor (37) and the first conveyor device (6) is a substantially vertical third auger conveyor (38), through which the crop can be introduced at one end of the after-threshers (7).

9. Pumpkin harvester according to claim 1, **characterised in that** the after-threshers (7) on each side each consist of a stationary threshing drum (35) and a third rotor (34), wherein the threshing drums are designed as perforated plates (40) enclosing the rotors (34) and the rotors (34) have attached paddle blades (36) which contact the perforated plate (40), wherein the after-threshers (7) have one side (41) for the entry of the crop and another end (42) for the exit of the seeds.

10. Pumpkin harvester according to claim 9, **characterised in that** a further after-thresher (7*) is arranged in series above each of the after-threshers (7) and **in that** the seeds emerge from the after-thresher (7) on the side of the entry of the crop into the further after-thresher (7*).

11. Pumpkin harvester according to claim 9, **characterised in that** a third conveyor device (13) is arranged at the other end (42) of the final thresher (7) for picking up the emerging seeds and conveying them to the seed tank.

## Revendications

1. Machine de récolte de cucurbitacées, avec un rouleau à pointes (1) pour recevoir la matière de récolte, un broyeur (2) pour réduire la matière de récolte, des batteuses pour séparer ensuite la matière de récolte en parties de fruits et graines et pour alimenter les graines vers un réservoir à grains, dans laquelle
a) le broyeur (2) contient un rouleau à couteaux (15) entouré par un boîtier (16) d'axe parallèle à l'axe du rouleau à pointes (1), à partir duquel boîtier (16) une tôle racleuse (14) s'étend directement entre les pointes du rouleau à pointes (1),
b) une première batteuse (4) qui est disposée directement sous le broyeur (2) et parallèlement à l'axe de celui-ci pour transporter la matière de récolte à partir du centre dans les deux directions opposées,
**caractérisée en ce que**
c) des deuxièmes batteuses (5) sont disposées des deux côtés dans la direction longitudinale, dont les entrées (22) sont respectivement sous les sorties bilatérales de la première batteuse (4) et aux autres extrémités desquelles se trouvent des ouvertures de sortie (28),
d) au-dessus des deux secondes batteuses (5) est disposé à chaque fois au moins une batteuse secondaire (7) et, au-dessous des deux secondes batteuses (5), est disposé un conduit (33) pour collecter la matière de récolte ainsi qu'un premier dispositif de transport (6) pour transporter la matière de récolte depuis le conduit (33) vers la batteuse secondaire (7).

2. Machine de récolte de cucurbitacées selon la revendication 1, **caractérisée en ce que** les batteuses secondaires (7) ont à une extrémité une alimentation de matière (11) et à l'autre extrémité un enlèvement de grains, auquel est relié un second dispositif de transport (13) conduisant à un réservoir à grains, et **en ce que** sur la face intérieure est appliqué un revêtement (39).

3. Machine de récolte de cucurbitacées selon la revendication 1, **caractérisée en ce que** le boîtier (16) du broyeur (2) forme la tôle racleuse (14) et celle-ci est inclinée vers le bas par rapport au broyeur (2).

4. Machine de récolte de cucurbitacées selon la revendication 1, **caractérisée en ce que** la première batteuse (4) est constituée d'un premier tambour batteur fixe (17) et d'un premier rotor (18), dans laquelle au moins la partie inférieure du tambour batteur (17) est formée de barres (19), au-dessous desquelles agit une première vis transporteuse (22) qui agit également dans des directions opposées, et dans laquelle le premier rotor (18) présente des pales (20) fonctionnant des deux côtés de manière décalée dans la direction opposée, lesquelles transportent la matière de récolte à partir du centre vers les extrémités extérieures (21) et lesquelles ne touchent pas l'intérieur du tambour batteur (17).

5. Machine de récolte de cucurbitacées selon la revendication 1, **caractérisée en ce que** les secondes batteuses (5) sont constituées à chaque fois d'un second tambour batteur fixe (23) et d'un deuxième rotor (24), dans laquelle les tambours batteurs (23) ont, sur leurs extrémités situées au-dessous des extrémités extérieures (21) de la première batteuse (4), une ouverture d'entrée (27) pour la matière de récolte, et l'autre extrémité forme une ouverture de sortie (28) et la partie inférieure du tambour batteur (23) présente des barres (25) et au-dessus se trouve une première vis transporteuse (22).

6. Machine de récolte de cucurbitacées selon la revendication 5, **caractérisée en ce que** les deuxièmes rotors (24) des secondes batteuses (5) portent des pales (20) fonctionnant de manière décalée qui ne touchent pas l'intérieur du tambour batteur (17) ainsi qu'une spirale (30) pour déplacer et éjecter les épluchures des cucurbitacées vers et à travers les ouvertures de sortie (28).

7. Machine de récolte de cucurbitacées selon la revendication 6 ou 4, **caractérisée en ce qu'**au moins un des deux rotors (18, 24) des batteuses (4, 5) présente des barres (31) orientées radialement entre les pales (20, 26) fonctionnant de manière décalée.

8. Machine de récolte de cucurbitacées selon la revendication 1, **caractérisée en ce que** le conduit (33) contient sous les secondes batteuses (5) une deuxième vis transporteuse (37) et le premier dispositif de transport (6) est une troisième vis transporteuse (38) sensiblement verticale, à travers laquelle la matière peut être introduite au niveau d'une extrémité de la batteuse secondaire (7).

9. Machine de récolte de cucurbitacées selon la revendication 1, **caractérisée en ce que** les batteuses secondaires bilatérales (7) sont constituées à chaque fois d'un tambour batteur fixe (35) et d'un troisième rotor (34), dans laquelle les tambours batteurs sont conçus sous la forme de plaques perforées (40) entourant les rotors et les rotors (34) présentent des pales (36) en fonctionnement qui touchent la plaque perforée (40), dans laquelle les batteuses secondaires (7) présentent un côté (41) pour l'entrée de matière et une autre extrémité (42) pour la sortie des grains.

10. Machine de récolte de cucurbitacées selon la revendication 9, **caractérisée en ce que**, au-dessus des batteuses secondaires (7), à chaque fois une autre batteuse secondaire (7*) est disposée en série et **en ce que** les grains sortent de la batteuse secondaire (7) du côté de l'entrée de la matière de récolte dans l'autre batteuse secondaire (7*).

11. Machine de récolte de cucurbitacées selon la revendication 9, **caractérisée en ce qu'**à l'autre extrémité (42) de la batteuse secondaire (7) est disposé un troisième dispositif de transport (13) pour recevoir les grains sortant et les transporter vers le réservoir à grains.
